(19) Europäisches Patentamt / European Patent Office / Office européen des brevets

(11) **EP 4 058 420 B1**

(12) **FASCICULE DE BREVET EUROPEEN**

(45) Date de publication et mention
de la délivrance du brevet:
**02.08.2023   Bulletin 2023/31**

(21) Numéro de dépôt: **20842009.1**

(22) Date de dépôt: **08.12.2020**

(51) Classification Internationale des Brevets (IPC):
***C04B 28/34*** *(2006.01)*      ***C04B 103/22*** *(2006.01)*

(52) Classification Coopérative des Brevets (CPC):
(C-Sets disponibles)
**C04B 28/34;** C04B 2103/22; Y02W 30/91     (Cont.)

(86) Numéro de dépôt international:
**PCT/FR2020/052338**

(87) Numéro de publication internationale:
**WO 2021/123564 (24.06.2021 Gazette 2021/25)**

(54) **THIOSULFATES POUR UNE UTILISATION COMME RETARDATEURS DE PRISE DE PÂTES DE CIMENTS PHOSPHOMAGNÉSIENS**

THIOSULFATE ZUR VERWENDUNG ALS VERZÖGERER FÜR
MAGNESIUMPHOSPHATZEMENTPASTEN

THIOSULFATES FOR USE AS RETARDERS FOR MAGNESIUM PHOSPHATE CEMENT PASTES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**21.09.2022   Bulletin 2022/38**

(73) Titulaires:
• **Orano Demantelement**
  **92320 Chatillon (FR)**
• **Université Gustave Eiffel**
  **77420 Champs-Sur-Marne (FR)**

(72) Inventeurs:
• **STEFAN, Lavinia**
  **78100 SAINT GERMAIN EN LAYE (FR)**
• **CHAUSSADENT, Thierry**
  **75013 PARIS (FR)**
• **BESSAIES-BEY, Hela**
  **57000 METZ (FR)**

(74) Mandataire: **Brevalex**
**Tour Trinity**
**1 B Place de la Défense**
**92400 Courbevoie (FR)**

(56) Documents cités:
**CN-A- 108 929 063      CN-A- 109 020 362
CN-A- 110 342 848      FR-A1- 2 769 619**

EP 4 058 420 B1

(52) Classification Coopérative des Brevets (CPC):
(Cont.)

C-Sets
**C04B 28/34, C04B 14/06, C04B 14/304,
C04B 22/0013, C04B 22/10, C04B 22/106,
C04B 22/124, C04B 22/126, C04B 22/128,
C04B 22/14, C04B 24/06, C04B 2103/30,
C04B 2103/32;
C04B 28/34, C04B 14/06, C04B 14/304,
C04B 22/10, C04B 22/106, C04B 22/124,
C04B 22/128, C04B 22/14, C04B 2103/22,**

**C04B 2103/30, C04B 2103/32;**
C04B 2103/22, C04B 22/14

## Description

### Domaine technique

L'invention se rapporte au domaine de la préparation de matériaux cimentaires à base de ciments phosphomagnésiens.

Plus spécifiquement, l'invention se rapporte à l'utilisation d'un thiosulfate comme retardateur de prise d'une pâte cimentaire comprenant un ciment phosphomagnésien.

L'invention est susceptible de trouver application dans tous les secteurs d'activité du génie civil pour la réalisation et la réhabilitation d'ouvrages de construction (ouvrages d'art, constructions industrielles, immeubles à usage d'habitation ou professionnel, constructions hydrauliques, etc) et d'infrastructures qu'elles soient urbaines, routières, ferroviaires ou autres.

### État de la technique antérieure

Les ciments phosphomagnésiens sont des ciments inorganiques de la famille des ciments activés par des acides. En effet, ce type de ciment fait prise après une réaction mettant en jeu un composé basique, en l'espèce une source de magnésium à l'état oxydé, et un composé acide, en l'espèce une source de phosphate, en présence d'eau. La source de magnésium oxydé est typiquement un oxyde de magnésium (MgO), aussi appelé magnésie, tandis que la source de phosphate est typiquement un sel d'acide phosphorique.

Les ciments phosphomagnésiens présentent des propriétés très intéressantes, notamment en ce qui concerne l'évolution de leurs propriétés mécaniques au jeune âge, leur résistance à l'abrasion, leurs faibles retraits endogènes et de dessiccation.

Néanmoins, leur utilisation reste à ce jour limitée dans le génie civil (où ils sont essentiellement employés pour des travaux de réparation, notamment dans le domaine routier) car elle est considérée comme difficilement compatible avec des applications à plus grande échelle et mettant en jeu la mise en oeuvre de grands volumes.

Les raisons en sont que :

- d'une part, ces ciments ont une prise rapide - qui peut même être instantanée lorsque les conditions initiales de la réaction acide-base ne sont pas maîtrisées - avec, à la clé, la formation d'agglomérats qui s'effritent facilement en poudre, et
- d'autre part, la réaction acide-base est très fortement exothermique, ce qui rend difficile la réalisation de cette réaction *in situ.*

Un certain nombre de pistes a été exploré pour retarder la prise d'un ciment phosphomagnésien comprenant un oxyde de magnésium comme source de magnésium à l'état oxydé telles que :

- celle de jouer sur la nature de la source de phosphate, sur le rapport eau-ciment (E/C) ou sur la surface spécifique de l'oxyde de magnésium ;
- celle de remplacer partiellement l'oxyde de magnésium par de l'alumine ;
- celle d'ajouter un superplastifiant polycarboxylate à la pâte cimentaire ; ou encore
- celle d'utiliser un retardateur de prise.

C'est cette dernière piste qui s'est révélée la plus concluante et qui est donc celle qui est utilisée en pratique.

À ce jour, le tétraborate disodique décahydraté ($Na_2B_4O_7 \cdot 10H_2O$), plus connu sous le nom de borax, et l'acide borique sont les retardateurs de prise les plus couramment préconisés pour les ciments phosphomagnésiens.

De nombreux auteurs préfèrent le borax à l'acide borique parce que, contrairement à ce dernier, le borax est un composé basique en sorte que sa dissolution dans une pâte cimentaire provoque une élévation du pH de cette pâte. Cette diminution de l'acidité contribue à réduire la quantité d'oxyde de magnésium susceptible de passer en solution et, par là-même, à ralentir la prise de la pâte cimentaire. Néanmoins, le temps de prise d'une pâte de ciment phosphomagnésien, même additionnée de borax, reste très inférieur au temps de prise d'une pâte de ciment Portland.

Par ailleurs, le borax tout comme l'acide borique font partie des substances chimiques classées « CMR », c'est-à-dire des substances qui sont considérées par le règlement (CE) 1907/2006 sur l'enregistrement, l'évaluation, l'autorisation et les restrictions des produits chimiques (ou règlement REACH) comme potentiellement ou de manière avérée Cancérigènes, Mutagènes et/ou Reprotoxiques. En l'espèce, le borax et l'acide borique sont classés CMR pour reprotoxicité. Il en résulte que non seulement le borax et l'acide borique sont menacés d'obsolescence mais que, de plus, leur utilisation sur des chantiers de génie civil implique d'instaurer des mesures de sécurité qui viennent s'ajouter à celles déjà imposées à ces chantiers.

C'est d'ailleurs l'une des raisons pour lesquelles il est proposé dans la demande internationale PCT WO 2016/102868, ci-après référence [1], d'utiliser un sel choisi parmi les acétates, formiates, benzoates, tartrates, oléates, oxalates, bromures et iodures de métaux alcalins, de métaux alcalino-terreux, de zinc, d'aluminium ou d'ammonium, pour retarder la prise d'une pâte de ciment phosphomagnésien.

Dans les exemples de la référence [1] sont présentés des résultats de tests visant à comparer l'effet retardateur de prise d'un certain nombre des sels proposés avec celui de l'acide borique pour des pâtes de ciment phosphomagnésien comprenant un oxyde de magnésium qui est dit soit « fortement calciné à haute température » (et dont on peut donc supposer qu'il est de type « dead burnt ») soit « légèrement calciné » (et dont on peut donc supposer qu'il est de type « soft burnt »).

Ces résultats montrent que, dans le cas de pâtes à oxyde de magnésium fortement calciné à haute température, un nombre limité des sels testés (formiate de zinc, formiate de calcium et acétate de potassium) a un effet retardateur de prise équivalent, voire supérieur, à celui de l'acide borique et que, dans le cas de pâtes à oxyde de magnésium légèrement calciné, seul l'acétate de potassium présente un effet retardateur équivalent - et seulement équivalent - à celui de l'acide borique (12 minutes *versus* 11 minutes).

Les résultats présentés dans la référence [1] s'inscrivent en droite ligne avec les données de la littérature qui mettent en évidence les difficultés rencontrées pour obtenir, pour des pâtes de ciment phosphomagnésien, des temps de prise compatibles avec une exploitation à grande échelle de ce type de ciment, et ce, tout particulièrement lorsque l'oxyde de magnésium entrant dans la composition du ciment phosphomagnésien n'est que légèrement calciné, c'est-à-dire de type « soft burnt ».

En effet, il a été montré que la calcination à haute température d'un oxyde de magnésium permet de réduire sa réactivité par diminution de sa surface spécifique et que le temps de prise d'un ciment phosphomagnésien est directement impacté par la surface spécifique de l'oxyde de magnésium qui entre dans sa composition : plus cette surface spécifique est importante, plus la réactivité est élevée et plus le temps de prise est court (cf., par exemple, E. Soudee et J. Pera, Cement and Concrète Research 2002, 32, 153-157, ci-après référence [2]).

Or, il se trouve que le prix d'achat des oxydes de magnésium augmente significativement avec le degré de calcination auquel ils ont été soumis à cause des coûts générés par les opérations de calcination.

Dans l'optique d'élargir les champs d'application des ciments phosphomagnésiens, il serait donc souhaitable de disposer d'un retardateur de prise qui ne soit pas une substance chimique classée CMR et qui permette d'augmenter très efficacement le temps de prise d'une pâte de ciment phosphomagnésien, et ce, non seulement lorsque la source de magnésium à l'état oxydé entrant dans la composition de ce ciment est un oxyde de magnésium fortement calciné mais également lorsqu'il s'agit d'un oxyde de magnésium légèrement calciné de sorte à permettre aux entreprises de génie civil de privilégier, pour des questions de coûts, l'utilisation d'un oxyde de magnésium de type « soft burnt ».

## Exposé de l'invention

L'invention vise justement à proposer un nouveau type de retardateur de prise qui répond à ces exigences.

En effet, l'invention a pour objet l'utilisation d'un thiosulfate comme retardateur de prise d'une pâte cimentaire comprenant un ciment phosphomagnésien.

Il est à noter que l'utilisation d'un thiosulfate dans le domaine de la cimentation n'est pas nouvelle en soi. Ainsi, le thiosulfate de sodium est proposé dans le brevet US 6,133,498, ci-après référence [3], comme agent réducteur des anions métalliques présents dans un déchet en vue de stabiliser ces anions dans une pâte de ciment phosphomagnésien. De même, un thiosulfate et, notamment, le thiosulfate de sodium est utilisé dans la demande internationale PCT WO 2018/002540, ci-après référence [4], pour stabiliser le mercure d'un déchet par précipitation en sulfure de mercure avant de l'encapsuler par cimentation.

FR2769619A1 décrit des liants à prise rapide, à haute résistance initiale, à utiliser en tant que matériaux de réparation à base de ciment, comprenant des ciments phosphatés.

CN1 10342848A divulgue un agent de mouture pour ciment de type retardateur qui comprend du thiosulfate de sodium.

CN109020362A utilise du thiosulfate de sodium comme composant d'un agent retardateur dans du ciment Portland PII 52.5.

CN108929063A a trait à un procédé de préparation d'un agent retardateur pour du plâtre de gypse.

Par contre, ce qui est totalement nouveau, c'est d'utiliser un composé choisi parmi les thiosulfates - dont, à ce jour, aucun effet potentiellement dangereux sur la santé n'a été mis en évidence (les thiosulfates de sodium et de magnésium étant même utilisés comme principes actifs médicamenteux) - pour retarder la prise d'une pâte de ciment phosphomagnésien et ce qui est totalement inattendu est que l'utilisation d'un thiosulfate permet de retarder et de ralentir très efficacement la prise d'une pâte de ciment phosphomagnésien aussi bien dans le cas où l'oxyde de magnésium entrant dans la constitution de ce ciment est de type « soft burnt » que dans celui où il est de type « dead burnt ».

Dans le cadre de l'invention, les termes « pâte cimentaire » sont pris dans leur acceptation habituelle, à savoir qu'ils désignent une pâte obtenue par gâchage d'un ciment - lequel est, dans le cadre de la présente invention, un ciment phosphomagnésien - ou d'une composition comprenant ce ciment, par une solution aqueuse dite solution de gâchage.

Le terme « thiosulfate » est également pris dans son acceptation habituelle, à savoir qu'il désigne tout sel de l'acide thiosulfurique ($H_2S_2O_3$).

Ainsi, le thiosulfate utile selon l'invention peut être un sel d'acide thiosulfurique et d'un élément métallique tel qu'un thiosulfate d'un métal alcalin du type thiosulfate de sodium ($Na_2S_2O_3$) ou thiosulfate de potassium ($K_2S_2O_3$), un thiosulfate d'un métal alcalino-terreux du type thiosulfate de calcium ($CaS_2O_3$), thiosulfate de magnésium ($MgS_2O_3$) ou thiosulfate de baryum ($BaS_2O_3$), ou bien un sel d'acide thiosulfurique et d'un élément non métallique.

Parmi ceux-ci, préférence est donnée au thiosulfate de sodium, que l'on utilise avantageusement sous sa forme pentahydratée ($Na_2S_2O_3 \cdot 5H_2O$), ainsi qu'au thiosulfate de potassium.

Les termes « ciment phosphomagnésien » sont également pris dans leur acceptation habituelle, à savoir qu'ils désignent un ciment composé d'au moins une source de magnésium à l'état oxydé, c'est-à-dire un composé comprenant du magnésium à l'état d'oxydation +II ou un précurseur de celui-ci, et d'au moins une source de phosphate.

Toute source de magnésium à l'état oxydé connue de l'homme du métier est utilisable dans le cadre de la présente invention. Ainsi, la source de magnésium à l'état oxydé peut notamment être de l'oxyde de magnésium, de l'hydroxyde de magnésium, du carbonate de magnésium, de l'hydroxycarbonate de calcium, du chlorure de magnésium, du bromure de magnésium ou un mélange de ceux-ci.

Conformément à l'invention, la source de phosphate à l'état oxydé est, de préférence, de l'oxyde de magnésium, auquel cas cet oxyde peut être :

- un oxyde de magnésium non calciné ;
- un oxyde de magnésium « soft burnt » ou « light burnt », c'est-à-dire un oxyde de magnésium résultant de la calcination d'un carbonate de magnésium ou d'un hydroxyde de magnésium à une température typiquement comprise entre 600 °C et 1000 °C ;
- un oxyde de magnésium « hard burnt », c'est-à-dire un oxyde de magnésium résultant de la calcination d'un carbonate de magnésium, d'un hydroxyde de magnésium ou d'un oxyde de magnésium « soft burnt » à une température typiquement comprise entre 1000 °C et 1500 °C ; ou encore
- un oxyde de magnésium « dead burnt », c'est-à-dire un oxyde de magnésium résultant de la calcination d'un carbonate de magnésium, d'un hydroxyde de magnésium ou d'un oxyde de magnésium « soft burnt » à une température typiquement supérieure à 1 500 °C et pouvant atteindre 2 300 °C.

À cet égard, on précise qu'il existe un test simple et rapide à mettre en oeuvre permettant de déterminer facilement la classe à laquelle appartient un oxyde de magnésium. Il s'agit d'un test de réactivité à l'acide citrique qui est utilisé industriellement. Ce test consiste à agiter 2,0 g d'un oxyde de magnésium en poudre dans 100 mL d'une solution d'acide citrique 0,4 N à laquelle on ajoute 5 gouttes de phénolphtaléine. Le temps de neutralisation, qui correspond au virage de la phénolphtaléine, est considéré comme temps de réactivité à l'acide citrique.

Le tableau I ci-après indique, pour chaque classe de MgO, le temps de réactivité à l'acide citrique ainsi que la surface spécifique BET (c'est-à-dire telle que déterminée par la méthode Brunauer, Emmett et Teller) en fonction de la température de calcination et de la durée de calcination.

Tableau I

| Classe MgO | Température de calcination du MgO (°C) | Temps de calcination du MgO (heures) | Surface spécifique BET ($m^2$/g) | Temps de réactivité à l'acide citrique (s) |
|---|---|---|---|---|
| Non calciné | - | - | 68,4 | 39 |
| Soft burnt | 1 000 | 3 | 42,4 | --- |
| | 1 000 | 24 | 26,84 | 70 |
| Hard burnt | 1 200 | 3 | 10,06 | 245 |
| | 1 200 | 24 | 7,32 | 565 |
| Dead burnt | 1 500 | 3 | 0,99 | > 900 |
| | 1 500 | 24 | 0,45 | > 900 |

Par ailleurs, l'oxyde de magnésium peut être un oxyde de magnésium pur (c'est-à-dire présentant une pureté, exprimée en masse, supérieure à 95 % et, de préférence, supérieure à 99 %) ou, au contraire, comprendre au moins un autre élément à hauteur d'au moins 5 % en masse tel que du silicium, du calcium, du fer ou de l'aluminium, cet (ces) élément(s) se trouvant en général sous la forme d'oxyde(s) et/ou d'hydroxyde(s).

La source de magnésium à l'état oxydé utilisée dans le cadre de la présente invention se présente typiquement sous forme pulvérulente.

Toute source de phosphate connue de l'homme du métier est également utilisable dans le cadre de la présente invention. Ainsi, la source de phosphate peut notamment être :

- un acide tel que l'acide phosphorique, l'acide orthophosphorique, l'acide pyrophosphorique ou l'acide polyphosphorique ;
- un sel d'acide phosphorique et d'un élément métallique tel qu'un phosphate d'un métal alcalin du type phosphate de sodium ou de potassium, un phosphate d'un métal alcalino-terreux du type phosphate de calcium ou de magnésium, le phosphate d'aluminium, un monohydrogénophosphate d'un métal alcalin du type monohydrogénophosphate de sodium ou de potassium, un monohydrogénophosphate d'un métal alcalino-terreux du type monohydrogénophosphate de calcium ou de magnésium, le monohydrogénophosphate d'aluminium, un dihydrogénophosphate d'un métal alcalin du type dihydrogénophosphate de sodium ou de potassium, un dihydrogénophosphate d'un métal alcalino-terreux du type dihydrogénophosphate de calcium ou de magnésium, le dihydrogénophosphate d'aluminium, un orthophosphate d'un métal alcalin du type orthophosphate de sodium ou de potassium, un orthophosphate d'un métal alcalino-terreux du type orthophosphate de calcium ou de magnésium, l'orthophosphate d'aluminium, un pyrophosphate d'un métal alcalin du type pyrophosphate de sodium ou de potassium, un pyrophosphate d'un métal alcalino-terreux du type pyrosphosphate de calcium ou de magnésium, le pyrophosphate d'aluminium, un tri-, tétra- ou pentapolyphosphate d'un métal alcalin du type tri-, tétra- ou pentapolyphosphate de sodium ou de potassium, un tri-, tétra- ou pentapolyphosphate d'un métal alcalino-terreux du type tri-, tétra- ou pentapolyphosphate de calcium ou de magnésium, ou un tri-, tétra- ou pentapolyphosphate d'aluminium ;
- un sel d'acide phosphorique et d'un élément non métallique tel que le phosphate ammoniacal, le monohydrogénophosphate ammoniacal, le dihydrogénophosphate ammoniacal, l'orthophosphate ammoniacal, le pyrophosphate ammoniacal, ou un tri-, tétra- ou pentapolyphosphate ammoniacal ; ou
- un mélange de ceux-ci.

Avantageusement, la source de phosphate est choisie parmi le phosphate de sodium ($Na_3PO_4$), le monohydrogénophosphate de sodium ($Na_2HPO_4$), le dihydrogénophosphate de sodium ($NaH_2PO_4$), le phosphate de potassium ($K_3PO_4$), le monohydrogénophosphate de potassium ($K_2HPO_4$), le dihydrogénophosphate de potassium ($KH_2PO_4$), le phosphate d'aluminium ($AlPO_4$), le monohydrogénophosphate d'aluminium ($Al_2(HPO_4)_3$), le phosphate d'ammonium ($(NH_4)_3PO_4$), le monohydrogénophosphate d'ammonium ($(NH_4)_2HPO_4$), le dihydrogénophosphate d'ammonium ($NH_4H_2PO_4$), et leurs mélanges.

Parmi ceux-ci, préférence est donnée au dihydrogénophosphate de potassium.

La source de phosphate peut se présenter sous une forme liquide (ce qui sera le cas d'un acide) ou sous une forme solide, typiquement pulvérulente (ce qui sera généralement le cas d'un sel). Dans le premier cas, elle est avantageusement présente dans la solution de gâchage tandis que, dans le deuxième cas, elle est avantageusement mélangée à la source de magnésium à l'état oxydé préalablement au gâchage.

Quoi qu'il en soit, la source de magnésium à l'état oxydé et la source de phosphate composant le ciment phosphomagnésien sont utilisées en quantités telles que le rapport molaire Mg/P (i.e. entre les éléments magnésium et phosphore) de ce ciment va préférentiellement de 1 à 12 et, mieux encore, de 1 à 10.

Par ailleurs, le thiosulfate est utilisé en quantité telle que le rapport massique thiosulfate/ciment phosphomagnésien (i.e. source de magnésium à l'état oxydé + source de phosphate) va, de préférence, de 0,01 à 0,25 et, mieux encore, de 0,03 à 0,20.

Avantageusement, il est présent dans la solution de gâchage.

Conformément à l'invention, la pâte cimentaire peut comprendre de plus au moins un adjuvant tel qu'un plastifiant (réducteur d'eau ou non), un superplastifiant, un retardateur de prise additionnel qui n'est pas un thiosulfate ou encore un composé qui combine plusieurs effets tel qu'un superplastifiant/retardateur de prise, en fonction des propriétés d'ouvrabilité, de prise et/ou de durcissement que l'on souhaite conférer à la pâte cimentaire.

En particulier, la composition peut comprendre un superplastifiant et/ou un retardateur de prise additionnel qui n'est pas un thiosulfate et dont l'effet retardateur de prise va s'additionner à celui du thiosulfate.

Des superplastifiants susceptibles de convenir sont notamment les superplastifiants hauts réducteurs d'eau du type polynaphtalène sulfonates.

Des retardateurs de prise additionnels susceptibles de convenir sont notamment l'acide fluorhydrique (HF) et ses sels (fluorure de sodium par exemple), l'acide borique ($H_3BO_3$) et ses sels dont le borax, l'acide citrique et ses sels (citrate de sodium par exemple), l'acide malique et ses sels (malate de sodium par exemple), l'acide tartrique et ses sels (tartrate de sodium par exemple), le carbonate de sodium ($Na_2CO_3$) et le gluconate de sodium.

Parmi ceux-ci, préférence est donnée à l'acide fluorhydrique, au fluorure de sodium, à l'acide citrique, au citrate de sodium, à l'acide borique et au borax.

Lorsque la pâte cimentaire comprend un superplastifiant, celui-ci est, de préférence, utilisé dans un rapport massique superplastifiant/ciment phosphomagnésien (i.e. source de magnésium à l'état oxydé + source de phosphate) d'au plus 0,05 tandis que, lorsque la pâte cimentaire comprend un retardateur de prise additionnel, celui-ci est, de préférence, utilisé dans un rapport massique retardateur de prise additionnel/ciment phosphomagnésien (i.e. source de magnésium à l'état oxydé + source de phosphate) d'au plus 0,1.

Conformément à l'invention, la pâte cimentaire peut comprendre de plus au moins un granulat, lequel peut notamment être :

- un filler, par exemple un filler siliceux tel qu'une poudre de quartz du type de celle commercialisée par la société Sibelco sous la référence C800, auquel cas le rapport massique filler/ciment phosphomagnésien (i.e. source de magnésium à l'état oxydé + source de phosphate) peut atteindre 0,3 ;
- un sable, par exemple du type de celui commercialisé par la société SIBELCO sous la référence CV32 ou du type de ceux commercialisés par les Sablières Palvadeau, auquel cas la pâte cimentaire prend alors le nom de mortier et le rapport massique sable/ciment phosphomagnésien (i.e. source de magnésium à l'état oxydé + source de phosphate) peut atteindre 6 ; ou
- un gravillon, auquel cas la pâte cimentaire prend alors le nom de béton et le rapport massique gravillon/ciment phosphomagnésien (i.e. source de magnésium à l'état oxydé + source de phosphate) peut aller jusqu'à 4.

Les termes « filler », « sable » et « gravillon » doivent être pris dans leur acceptation usuelle dans le domaine des mortiers et bétons (cf. notamment la norme NF EN 12620 relative aux granulats pour béton), à savoir que :

- un filler est un granulat dont la dimension supérieure D est inférieure à 2 mm avec au moins 85 % de passant à 1,25 mm et 70 % de passant à 0,063 mm ;
- un sable est un granulat dont la dimension inférieure d est au moins égale à 0 mm et dont la dimension supérieure D est au plus égale à 4 mm ; tandis que
- un gravillon est un granulat dont la dimension inférieure d est au moins égale à 2 mm et dont la dimension supérieure D est au moins égale à 4 mm, étant entendu que, dans le cadre de la présente invention, la dimension supérieure D du gravillon est, de préférence, au plus égale à 16 mm.

Conformément à l'invention, la pâte cimentaire comprend typiquement un rapport massique eau/ciment phosphomagnésien allant de 0,10 à 1, de préférence, de 0,20 à 0,60 et, mieux encore, de 0,30 à 0,55.

D'autres caractéristiques et avantages de l'invention ressortiront du complément de description qui suit et qui est donné en référence aux figures annexées.

Il va de soi que ce complément de description n'est donné qu'à titre d'illustration de l'objet de l'invention et ne doit en aucun cas être interprété comme une limitation de cet objet.

**Brève description des figures**

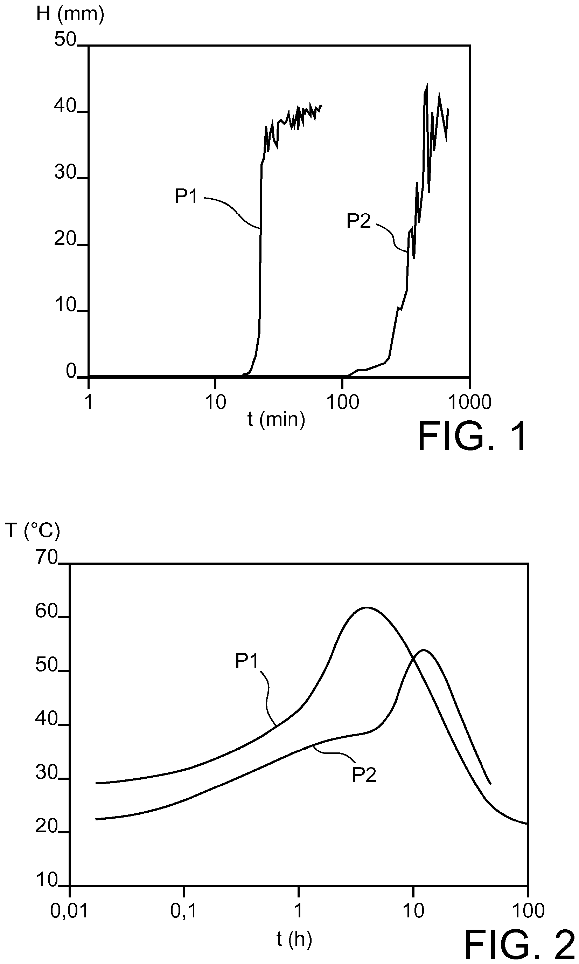

La figure 1 illustre la hauteur de prise, notée H et exprimée en mm, en fonction du temps, noté t et exprimé en minutes, telle qu'obtenue pour deux pâtes, respectivement P1 et P2, de ciment phosphomagnésien à MgO « dead burnt » et ne différant l'une de l'autre qu'en ce que la pâte P1 ne comprend que du borax comme retardateur de prise tandis que la pâte P2 comprend à la fois du thiosulfate de sodium et du borax comme retardateurs de prise.
La figure 2 illustre l'évolution de la température, notée T et exprimée en °C, en fonction du temps, noté t et exprimé en heures, telle qu'observée pour les pâtes cimentaires P1 et P2.

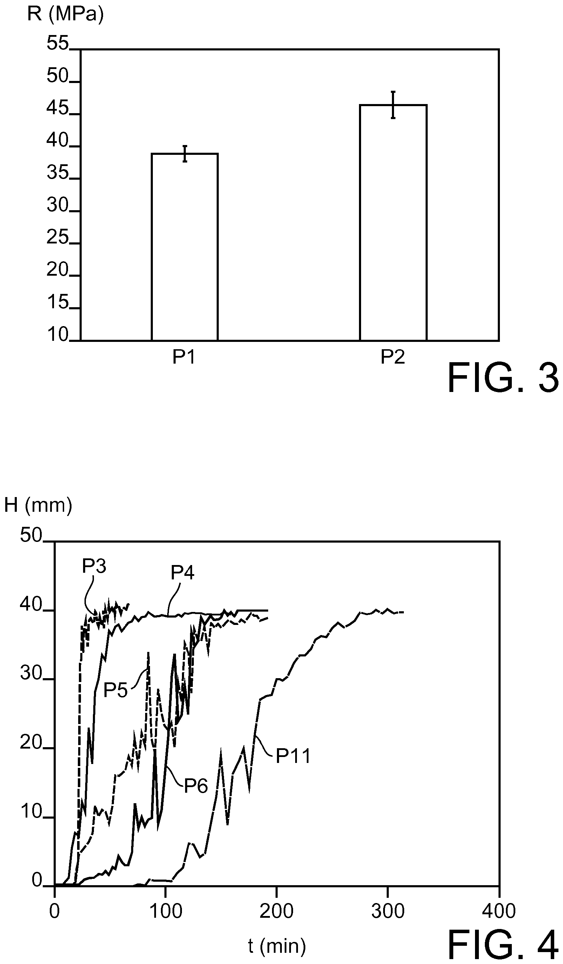

La figure 3 illustre la résistance en compression à 28 jours, notée R et exprimée en MPa, telle qu'obtenue pour deux matériaux résultant du durcissement des pâtes cimentaires P1 et P2 respectivement.
La figure 4 illustre la hauteur de prise, notée H et exprimée en mm, en fonction du temps, noté t et exprimé en minutes, telle qu'obtenue pour cinq pâtes, respectivement P3, P4, P5, P6 et P11, de ciment phosphomagnésien à MgO « dead burnt », différant les unes des autres par le retardateur de prise qu'elles comprennent (borax pour la pâte P3 ; thiosulfate de sodium, à des teneurs massiques différentes, pour les pâtes P4, P5 et P6 ; thiosulfate de potassium pour la pâte P11) et, d'autre part, par le fait que les pâtes P3, P4, P5 et P11 sont des mortiers tandis que la pâte P6 est exempte de granulats.

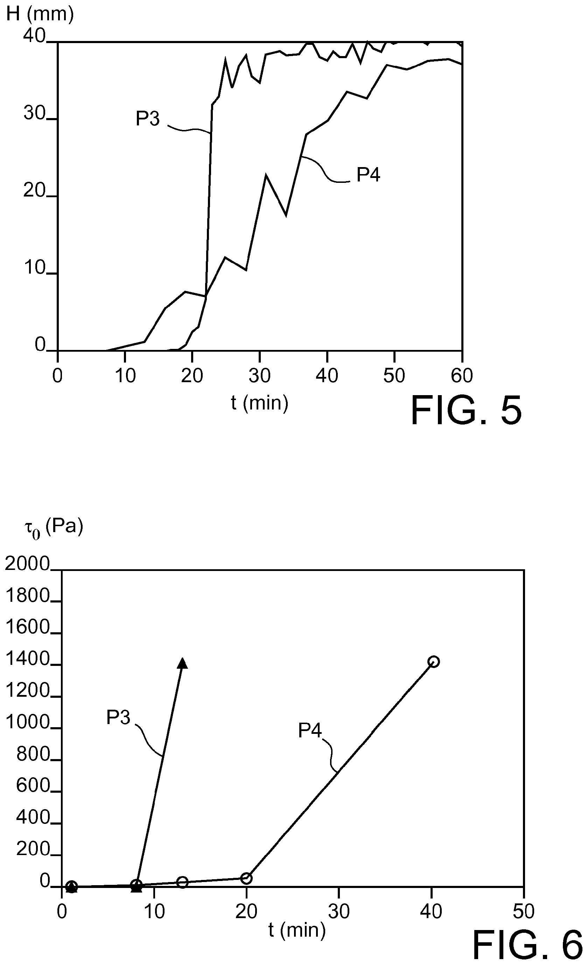

La figure 5 est une reprise des données montrées sur la figure 4 pour les pâtes cimentaires P3 et P4 permettant de mieux visualiser la hauteur de prise de ces pâtes sur les 60 premières minutes de l'axe des abscisses de la figure 4. La figure 6 illustre le seuil d'écoulement, noté $\tau_0$ et exprimé en Pa, en fonction du temps, noté t et exprimé en minutes, tel qu'obtenu pour les pâtes cimentaires P3 et P4.

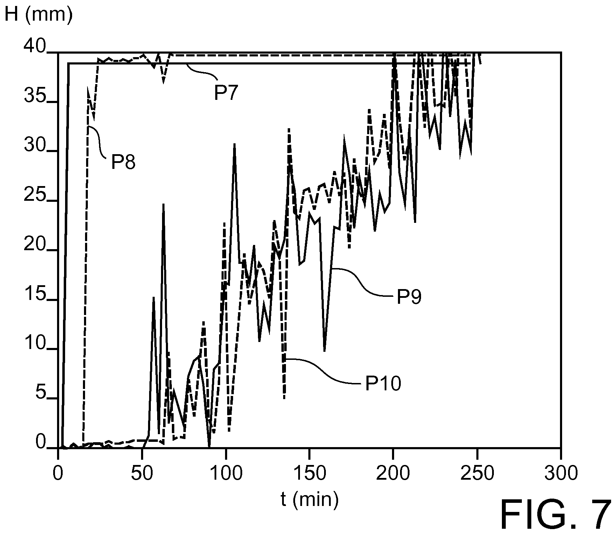

La figure 7 illustre la hauteur de prise, notée H et exprimée en mm, en fonction du temps, noté t et exprimé en mm, telle qu'obtenue pour quatre pâtes, respectivement P7, P8, P9 et P10, de ciment phosphomagnésien comprenant un MgO assimilé à un MgO « soft burnt », ces pâtes différant les unes des autres en ce que les pâtes P7 et P8 ne comprennent que du borax, à des teneurs massiques différentes, en tant que retardateur de prise tandis que les pâtes P9 et P10 ne comprennent que du thiosulfate de sodium, à des teneurs massiques différentes, comme retardateur de prise.

**Exposé détaillé de modes de mise en oeuvre particuliers**

Dans les exemples qui suivent, toutes les pâtes cimentaires sont des pâtes de ciment phosphomagnésien et ont été préparées en utilisant :

- comme oxyde de magnésium : soit un oxyde de magnésium « dead burnt » - ci-après noté MgO DB - provenant de Richard Baker Harrison Ltd (DBM90 200 mesh), de surface spécifique égale à 0,75 m$^2$/g, soit un oxyde de magnésium de haute pureté (>98%) provenant de ChemLab, de surface spécifique égale à 64 m$^2$/g et qui est assimilé à un oxyde de magnésium « soft burnt » - ci-après noté MgO SB - d'après le tableau I ci-avant ;
- comme sel d'acide phosphorique : du dihydrogénophosphate de potassium $KH_2PO_4$ provenant de ChemLab ; et
- comme retardateur(s) de prise : du thiosulfate de sodium pentahydraté $Na_2S_2O_3 \cdot 5H_2O$ provenant de ChemLab, du thiosulfate de potassium $K_2S_2O_3$ provenant de Sigma-Aldrich et/ou du borax $Na_2B_4O_7 \cdot 10H_2O$ provenant de ChemLab.

Certaines de ces pâtes comprennent des granulats, auquel cas elles comprennent une poudre de quartz (C800 de Sibelco) et du sable de granulométrie 0,315/1 mm (Sablières Palvadeau).

Par ailleurs, toutes ces pâtes cimentaires ont été préparées en suivant la même séquence de malaxage dans laquelle :

- les composants solides (MgO, $KH_2PO_4$ et, le cas échéant, borax et/ou quartz et sable) ont été introduits dans un bol de malaxage et malaxés ensemble pendant 2 minutes pour obtenir un mélange homogène, puis
- l'eau de gâchage contenant un thiosulfate (dans le cas d'une pâte selon l'invention) ou non (dans le cas d'une pâte servant de référence) a été ajoutée au mélange et l'ensemble a été malaxé pendant 2 minutes.

Le durcissement des pâtes cimentaires a été réalisé à une température de 20 °C $\pm$ 2 °C et une humidité relative supérieure à 50 %.

Les temps de prise des pâtes cimentaires ont été mesurés par des essais à l'aiguille de Vicat selon la norme européenne NF EN 196-3: 2017 (Méthodes d'essais des ciments. Partie 3 : détermination du temps de prise et de la stabilité).

Les températures des pâtes cimentaires ont été mesurées au moyen d'un calorimètre semi-adiabatique de Langavant selon la norme NF EN 196-9: 2010 (Méthodes d'essais des ciments. Partie 9 : chaleur d'hydratation, méthode semi-adiabatique).

Les résistances à la compression des matériaux issus du durcissement des pâtes cimentaires ont été mesurées au moyen d'une presse sur des demi-éprouvettes (4 cm $\times$ 4 cm x 16 cm) de ces matériaux selon la norme NF EN 196-1: 2016 (Méthodes d'essais des ciments. Partie 1 : détermination des résistances mécaniques).

Les seuils d'écoulement des pâtes cimentaires ont été déterminés par des essais d'étalement ; ces essais consistent à verser lentement, sur une plaque de verre mouillée, des échantillons des pâtes cimentaires contenus dans un bécher, après avoir laissé ces pâtes au repos dans le malaxeur puis les avoir malaxées pendant 15 secondes juste avant d'effectuer les essais d'étalement ; le rayon d'étalement des échantillons est mesuré et le seuil d'écoulement, noté $\tau_0$ et exprimé en N/m$^2$ ou, mieux encore, en Pa, est calculé au moyen de la relation de Roussel et Coussot en vertu de laquelle :

$$\tau_0 = \frac{225 \rho g V^2}{128 \pi^2 R^5}$$

$\rho$ est la masse volumique de la pâte cimentaire en kg/m$^3$
g est l'accélération de la pesanteur en N/kg

V est le volume de l'échantillon de pâte cimentaire versé sur la plaque en $m^3$

R est le rayon d'étalement de l'échantillon de pâte cimentaire sur la plaque en m.

**Exemple 1 : Mise en évidence des effets bénéfiques liés à la présence de thiosulfate de sodium dans une pâte de ciment phosphomagnésien à MgO DB comprenant du borax**

On prépare deux pâtes, respectivement P1 et P2, de ciment phosphomagnésien à MgO DB qui ne diffèrent l'une de l'autre qu'en ce que la pâte P1 (servant de référence) ne comprend que du borax comme retardateur de prise tandis que la pâte P2 comprend à la fois du thiosulfate de sodium et du borax comme retardateurs de prise.

La composition qualitative et quantitative de ces pâtes est présentée dans le tableau II ci-après.

Tableau II

| Pâtes | MgO DB (g) | KH$_2$PO$_4$ (g) | Borax (g) | Quartz (g) | Sable (g) | Thiosulfate de Na (g) | Eau (g) |
|---|---|---|---|---|---|---|---|
| P1 | 500 | 340 | 25[a] | 217 | 1489 | --- | 252 |
| P2 | 500 | 340 | 25[a] | 217 | 1489 | 44[b] | 252 |
| a) soit un rapport massique borax/(MgO + KH$_2$PO$_4$) d'environ 0,03 | | | | | | | |
| b) soit un rapport massique thiosulfate/(MgO + KH$_2$PO$_4$) d'environ 0,05 | | | | | | | |

Les pâtes P1 et P2 sont soumises à des essais visant à mesurer leur temps de prise ainsi que leur température en cours de prise, tandis que les matériaux obtenus par durcissement de ces pâtes sont soumis à des essais visant à mesurer leur résistance en compression.

Les résultats des mesures de temps de prise sont présentés dans le tableau III ci-après et sur la figure 1 tandis que les résultats des mesures de température en cours de prise et de résistance en compression sont illustrés sur les figures 2 et 3.

Tableau III

| Pâtes | Temps de début de prise (min) | Temps de fin de prise (min) |
|---|---|---|
| P1 | 21 | 24 |
| P2 | 234 (soit 3 heures et 54 min) | 513 (soit 8 heures et 33 min) |

Le tableau III et la figure 1 montrent que la présence de thiosulfate de sodium dans une pâte de ciment phosphomagnésien à MgO DB comprenant du borax permet de retarder et de ralentir drastiquement la prise de cette pâte par rapport à celle d'une pâte cimentaire de composition identique mais exempte de thiosulfate de sodium puisque la présence de thiosulfate de sodium permet de multiplier le temps de début de prise d'un facteur 11 et le temps de fin de prise d'un facteur 21.

La figure 2 montre que la présence de thiosulfate de sodium dans une pâte de ciment phosphomagnésien à MgO DB comprenant du borax permet aussi d'abaisser significativement l'élévation de température de cette pâte en cours de prise et, donc, sa chaleur d'hydratation par rapport à celle d'une pâte cimentaire de composition identique mais exempte de thiosulfate de sodium.

Quant à la figure 3, elle montre que la présence de thiosulfate de sodium dans une pâte de ciment phosphomagnésien à MgO DB comprenant du borax n'impacte pas négativement la résistance en compression du matériau résultant du durcissement de cette pâte.

Il est à noter que les temps de prise obtenus pour la pâte P2 sont semblables à ceux obtenus pour des pâtes de ciments Portland.

**Exemple 2 : Mise en évidence des effets bénéfiques liés à la présence de thiosulfate de sodium ou de potassium dans des pâtes de ciment phosphomagnésien à MgO DB exemptes de borax**

On prépare cinq pâtes, respectivement P3, P4, P5, P6 et P11, de ciment phosphomagnésien à MgO DB.

La pâte P3 (servant de référence) ne comprend que du borax comme retardateur de prise.

Les pâtes P4, P5 et P6 ne comprennent que du thiosulfate de sodium, à des teneurs massiques différentes, comme retardateur de prise.

La pâte P11 ne comprend que du thiosulfate de potassium comme retardateur de prise.

En outre, la pâte P6 diffère des quatre autres en ce qu'elle ne comprend ni quartz ni sable.

La composition qualitative et quantitative de ces pâtes est présentée dans le tableau IV ci-après.

Tableau IV

| Pâtes | MgO DB (g) | KH$_2$PO$_4$ (g) | Borax (g) | Quartz (g) | Sable (g) | Na$_2$S$_2$O$_3$ (g) | K$_2$S$_2$O$_3$ (g) | Eau (g) |
|---|---|---|---|---|---|---|---|---|
| P3 | 500 | 340 | 25[a)] | 217 | 1489 | ---- | ---- | 252 |
| P4 | 500 | 340 | ---- | 217 | 1489 | 66[b)] | ---- | 252 |
| P5 | 500 | 340 | ---- | 217 | 1489 | 88[c)] | ---- | 252 |
| P6 | 500 | 340 | ---- | ----- | --- | 100[d)] | ---- | 252 |
| P11 | 500 | 340 | ---- | 217 | 1489 | ----- | 76,71[e)] | 288,3 |

a) soit un rapport massique borax/(MgO + KH$_2$PO$_4$) d'environ 0,03
b) soit un rapport massique thiosulfate/(MgO + KH$_2$PO$_4$) d'environ 0,08
c) soit un rapport massique thiosulfate/(MgO + KH$_2$PO$_4$) d'environ 0,1
d) soit un rapport massique thiosulfate/(MgO + KH$_2$PO$_4$) d'environ 0,12
e) soit un rapport massique thiosulfate/(MgO + KH$_2$PO$_4$) d'environ 0,09

Les pâtes P3 à P6 et P11 sont soumises à des essais visant à mesurer leur temps de prise tandis que les pâtes P3 et P4 sont soumises de plus à des essais visant à mesurer leur seuil d'écoulement.

Les résultats des mesures de temps de prise sont présentés dans le tableau V ci-après et sur les figures 4 et 5 tandis que les résultats des mesures de seuil d'écoulement sont illustrés sur la figure 6.

Tableau V

| Pâtes | Temps de fin de prise (min) |
|---|---|
| P3 | 24 |
| P4 | 47 |
| P5 | 116 (soit 1 heure et 56 min) |
| P6 | 127 (soit 2 heures et 7 min) |
| P11 | 236 (soit 3 heures et 56 min) |

Ce tableau et la figure 4 montrent que la présence de thiosulfate de sodium dans une pâte de ciment phosphomagnésien à MgO DB permet, en l'absence de borax, de retarder la fin de prise de cette pâte, et ce, de manière d'autant plus marquée que la teneur massique en thiosulfate de sodium de la pâte est élevée.

Ils montrent de plus que la présence de thiosulfate de potassium dans une pâte de ciment phosphomagnésien à MgO DB permet de retarder et de ralentir drastiquement la prise de cette pâte.

Une particularité de la présence de thiosulfate de sodium dans une pâte cimentaire est d'augmenter le caractère thixotrope de cette pâte. Laissée au repos, la pâte cimentaire commence à se structurer dans les 10 à 20 premières minutes. Bien qu'à ce moment la prise initiale ne soit pas encore atteinte, le squelette solide de la pâte cimentaire commence à se former. On peut observer ce phénomène lors des premières mesures de hauteur de prise qui sont différentes de 0 dans les essais à l'aiguille de Vicat. La figure 5 montre qu'il survient pour la pâte P4 comprenant du thiosulfate de sodium avant de survenir pour la pâte P3 comprenant du borax.

Cependant, sous contrainte telle que celle induite par un malaxage, la pâte cimentaire peut se déstructurer, ce qui permet de diminuer sa viscosité.

Ainsi, la figure 6 qui illustre les résultats des mesures du seuil d'écoulement des pâtes P3 et P4 telles que réalisées après avoir laissé ces pâtes au repos dans le malaxeur puis les avoir malaxées pendant 15 secondes montre que, d'une part, le seuil d'écoulement de la pâte P4 reste faible pendant plus longtemps que le seuil d'écoulement de la pâte P3 et, d'autre part, l'augmentation de ce seuil présente une cinétique plus lente que l'augmentation du seuil d'écoulement de la pâte P3. Ceci signifie qu'une pâte cimentaire comprenant du thiosulfate de sodium reste fluide plus longtemps qu'une pâte cimentaire comprenant du borax, ce qui est de nature à faciliter sa mise en oeuvre à une échelle industrielle.

**Exemple 3** : **Mise en évidence des effets bénéfiques liés à la présence de thiosulfate de sodium dans des pâtes de ciment phosphomagnésien à MgO SB exemptes de borax**

On prépare quatre pâtes, respectivement P7, P8, P9 et P10, de ciment phosphomagnésien à MgO SB différant les unes des autres en ce que les pâtes P7 et P8 (servant de références) ne comprennent que du borax, à des teneurs massiques différentes, comme retardateur de prise tandis que les pâtes P9 et P10 ne comprennent que du thiosulfate de sodium, à des teneurs massiques différentes, comme retardateur de prise.

Toutes ces pâtes sont exemptes de quartz et de sable.

Leur composition qualitative et quantitative est présentée dans le tableau VI ci-après.

Tableau VI

| Pâtes | MgO SB (g) | KH$_2$PO$_4$ (g) | Borax (g) | Thiosulfate de Na (g) | Eau (g) |
|---|---|---|---|---|---|
| **P7** | 100 | 338 | 32[a)] | ---- | 100 |
| **P8** | 100 | 338 | 80[b)] | ---- | 100 |
| **P9** | 100 | 338 | ---- | 65[c)] | 100 |
| **P10** | 100 | 338 | ---- | 80[d)] | 100 |
| a) soit un rapport massique borax/(MgO + KH$_2$PO$_4$) d'environ 0,07 b) soit un rapport massique borax/(MgO + KH$_2$PO$_4$) d'environ 0,18 c) soit un rapport massique thiosulfate/(MgO + KH$_2$PO$_4$) d'environ 0,15 d) soit un rapport massique thiosulfate/(MgO + KH$_2$PO$_4$) d'environ 0,18 | | | | | |

Les pâtes P7 à P10 sont soumises à des essais visant à mesurer leur temps de prise.

Les résultats de ces essais sont présentés dans le tableau VII ci-après et illustrés sur la figure 7.

Tableau VII

| Pâtes | Temps de début de prise (min) | Temps de fin de prise (min) |
|---|---|---|
| **P7** | 6 | 6 |
| **P8** | 18 | 18 |
| **P9** | 63 | 198 (soit 3 heures et 18 min) |
| **P10** | 60 | 198 (soit 3 heures et 18 min) |

Ce tableau et cette figure montrent que, dans le cas d'une pâte de ciment phosphomagnésien à MgO SB, le borax apparaît être inefficace pour retarder la prise de cette pâte.

Par contre, le thiosulfate de sodium permet de retarder et de ralentir très efficacement la prise d'une telle pâte de ciment puisqu'une prise initiale est obtenue, pour les pâtes P9 et P10, aux alentours d'une heure tandis qu'une prise finale est obtenue, pour ces mêmes pâtes, aux alentours de 3 heures et 20 min.

De tels temps de prise sont compatibles avec une exploitation à grande échelle des ciments phosphomagnésiens et permettent de s'affranchir de l'utilisation d'un oxyde de magnésium « dead burnt ».

**Références citées**

**[1]** WO-A-2016/102868
**[2]** E. Soudee et J. Pera, Cement and Concrète Research 2002, 32, 153-157
**[3]** US-A-6,133,498
**[4]** WO-A-2018/002540

**Revendications**

**1.** Utilisation d'un thiosulfate comme retardateur de prise d'une pâte cimentaire comprenant un ciment phosphomagnésien.

2. Utilisation selon la revendication 1, dans laquelle le thiosulfate est le thiosulfate de sodium, le thiosulfate de potassium, le thiosulfate de calcium ou le thiosulfate de magnésium et, de préférence, le thiosulfate de sodium ou le thiosulfate de potassium.

3. Utilisation selon la revendication 1 ou la revendication 2, dans laquelle le ciment phosphomagnésien comprend une source de magnésium à l'état oxydé choisie parmi l'oxyde de magnésium, l'hydroxyde de magnésium, le carbonate de magnésium, l'hydroxycarbonate de calcium, le chlorure de magnésium, le bromure de magnésium ou un mélange de ceux-ci, la source de magnésium à l'état oxydé étant, de préférence, l'oxyde de magnésium.

4. Utilisation selon l'une quelconque des revendications 1 à 3, dans laquelle le ciment phosphomagnésien comprend une source de phosphate choisie parmi le phosphate de sodium, le monohydrogénophosphate de sodium, le dihydrogénophosphate de sodium, le phosphate de potassium, le monohydrogénophosphate de potassium, le dihydrogénophosphate de potassium, le phosphate d'aluminium, le monohydrogénophosphate d'aluminium, le phosphate d'ammonium, le monohydrogénophosphate d'ammonium, le dihydrogénophosphate d'ammonium, et leurs mélanges, la source de phosphate étant, de préférence, le dihydrogénophosphate de potassium.

5. Utilisation selon l'une quelconque des revendications 1 à 4, dans laquelle le ciment phosphomagnésien présente un rapport molaire magnésium/phosphore allant de 1 à 12 et, de préférence, de 1 à 10.

6. Utilisation selon l'une quelconque des revendications 1 à 5, dans laquelle la pâte cimentaire présente un rapport massique thiosulfate/ciment phosphomagnésien allant de 0,01 à 0,25 et, de préférence, de 0,03 à 0,20.

7. Utilisation selon l'une quelconque des revendications 1 à 6, dans laquelle la pâte cimentaire comprend de plus au moins un adjuvant choisi parmi un plastifiant, un superplastifiant et un retardateur de prise autre qu'un thiosulfate.

8. Utilisation selon la revendication 7, dans laquelle le retardateur de prise autre qu'un thiosulfate est l'acide fluorhydrique, le fluorure de sodium, l'acide citrique, le citrate de sodium, l'acide borique ou le borax.

9. Utilisation selon l'une quelconque des revendications 1 à 8, dans laquelle la pâte cimentaire comprend de plus au moins un granulat choisi parmi un filler, un sable et un gravillon.

10. Utilisation selon l'une quelconque des revendications 1 à 9, dans laquelle la pâte cimentaire présente un rapport massique eau/ciment phosphomagnésien allant de 0,10 à 1 et, de préférence, de 0,20 à 0,60.

**Patentansprüche**

1. Verwendung eines Thiosulfats als Abbindeverzögerer einer Zementpaste, umfassend einen Magnesiumphosphat-Zement.

2. Verwendung nach Anspruch 1, wobei das Thiosulfat Natriumthiosulfat, Kaliumthiosulfat, Calciumthiosulfat oder Magnesiumthiosulfat und vorzugsweise Natriumthiosulfat oder Kaliumthiosulfat ist.

3. Verwendung nach Anspruch 1 oder Anspruch 2, wobei der Magnesiumphosphat-Zement eine Quelle von Magnesium im Oxidzustand umfasst, die aus Magnesiumoxid, Magnesiumhydroxid, Magnesiumcarbonat, Calciumhydroxycarbonat, Magnesiumchlorid, Magnesiumbromid oder einem Gemisch dieser ausgewählt ist, wobei die Quelle von Magnesium im Oxidzustand vorzugsweise Magnesiumoxid ist.

4. Verwendung nach einem der Ansprüche 1 bis 3, wobei der Magnesiumphosphat-Zement eine Quelle von Phosphat umfasst, die aus Natriumphosphat, Natriummonohydrogenphosphat, Natriumdihydrogenphosphat, Kaliumphosphat, Kaliummonohydrogenphosphat, Kaliumdihydrogenphosphat, Aluminiumphosphat, Aluminiummonohydrogenphosphat, Ammoniumphosphat, Ammoniummonohydrogenphosphat, Ammoniumdihydrogenphosphat und deren Gemischen ausgewählt ist, wobei die Quelle von Phosphat vorzugsweise Kaliumdihydrogenphosphat ist.

5. Verwendung nach einem der Ansprüche 1 bis 4, wobei der Magnesiumphosphat-Zement ein Magnesium/Phosphor-Molverhältnis aufweist, das von 1 bis 12 und vorzugsweise von 1 bis 10 reicht.

**6.** Verwendung nach einem der Ansprüche 1 bis 5, wobei die Zementpaste ein Thiosulfat/Magnesiumphosphat-Massenverhältnis aufweist, das von 0,01 bis 0,25 und vorzugsweise von 0,03 bis 0,20 reicht.

**7.** Verwendung nach einem der Ansprüche 1 bis 6, wobei die Zementpaste außerdem mindestens ein Adjuvans umfasst, das aus einem Weichmacher, einem Superweichmacher und einem Abbindeverzögerer, bei dem es sich nicht um ein Thiosulfat handelt, ausgewählt ist.

**8.** Verwendung nach Anspruch 7, wobei der Abbindeverzögerer, bei dem es sich nicht um ein Thiosulfat handelt, Fluorwasserstoffsäure, Natriumfluorid, Citronensäure, Natriumcitrat, Borsäure oder Borax ist.

**9.** Verwendung nach einem der Ansprüche 1 bis 8, wobei die Zementpaste außerdem mindestens ein Granulat umfasst, das aus einem Füllstoff, einem Sand und einem Splitt ausgewählt ist.

**10.** Verwendung nach einem der Ansprüche 1 bis 9, wobei die Zementpaste ein Wasser/Magnesiumphosphat-Zement-Massenverhältnis aufweist, das von 0,10 bis 1, vorzugsweise von 0,20 bis 0,60 reicht.

**Claims**

**1.** Use of a thiosulfate as a retarder for a cement paste comprising a magnesium phosphate cement.

**2.** Use according to claim 1, wherein the thiosulfate is sodium thiosulfate, potassium thiosulfate, calcium thiosulfate or magnesium thiosulfate and, preferably, sodium thiosulfate or potassium thiosulfate.

**3.** Use according to claim 1 or claim 2, wherein the magnesium phosphate cement comprises a source of magnesium in oxidized state chosen from magnesium oxide, magnesium hydroxide, magnesium carbonate, calcium hydroxycarbonate, magnesium chloride, magnesium bromide or a mixture thereof, the source of magnesium in oxidized state being, preferably, magnesium oxide.

**4.** Use according to any one of claims 1 to 3, wherein the magnesium phosphate cement comprises a source of phosphate chosen from sodium phosphate, sodium monohydrogen phosphate, sodium dihydrogen phosphate, potassium phosphate, potassium monohydrogen phosphate, potassium dihydrogen phosphate, aluminium phosphate, aluminium monohydrogen phosphate, ammonium phosphate, ammonium monohydrogen phosphate, ammonium dihydrogen phosphate, and mixtures thereof, the source of phosphate being, preferably, potassium dihydrogen phosphate.

**5.** Use according to any one of claims 1 to 4, wherein the magnesium phosphate cement has a molar ratio magnesium/phosphorus ranging from 1 to 12 and, preferably, from 1 to 10.

**6.** Use according to any one of claims 1 to 5, wherein the cement paste has a mass ratio thiosulfate/magnesium phosphate cement ranging from 0.01 to 0.25 and, preferably, from 0.03 to 0.20.

**7.** Use according to any one of claims 1 to 6, wherein the cement paste further comprises at least one adjuvant chosen from a plasticiser, a superplasticiser and a retarder other than a thiosulfate.

**8.** Use according to claim 7, wherein the retarder other than a thiosulfate is hydrofluoric acid, sodium fluoride, citric acid, sodium citrate, boric acid or borax.

**9.** Use according to any one of claims 1 to 8, wherein the cement paste further comprises at least one aggregate chosen from a filler, a sand and a fine gravel.

**10.** Use according to any one of claims 1 to 9, wherein the cement paste has a mass ratio water/magnesium phosphate cement ranging from 0.10 to 1 and, preferably, from 0.20 to 0.60.

FIG. 1

FIG. 2

FIG. 3

FIG. 4

FIG. 5

FIG. 6

FIG. 7

## RÉFÉRENCES CITÉES DANS LA DESCRIPTION

**Documents brevets cités dans la description**

- WO 2016102868 A
- US 6133498 A
- WO 2018002540 A
- FR 2769619 A1

- CN 110342848 A
- CN 109020362 A
- CN 108929063 A

**Littérature non-brevet citée dans la description**

- **E. SOUDEE ; J. PERA.** *Cement and Concrète Research,* 2002, vol. 32, 153-157